# EUROPÄISCHE PATENTANMELDUNG

(11) **EP 4 484 845 A1**
(43) Veröffentlichungstag der Anmeldung: **01.01.2025**
(21) Anmeldenummer: 24172575.3
(22) Anmeldetag: 25.04.2024
(51) Int. Cl.: F24F 13/20, F16B 2/14, F16B 5/06, F24F 13/32

(54) **SCHIEBER ZUM JUSTIEREN UND BEFESTIGEN EINES LÜFTERS IN EINEM LÜFTUNGSGERÄT**

(30) Priorität: 29.06.2023 DE 102023117174
(71) Anmelder: Stiebel Eltron GmbH & Co. KG, 37603 Holzminden (DE)
(72) Erfinder: Beverungen, Johannes, 37688 Beverungen (DE); Offermann, Jannis, 31020 Salzhemmendorf (DE)

(57) **Zusammenfassung**

Die Erfindung betrifft einen Schieber 100 zum Justieren und Befestigen eines Lüfters 500 in einem Lüftungsgeräts, mit einem vorderen Ende 110 und einem hinteren Ende 120, einer oberen Fläche 130 und einer unteren Fläche 140, wobei die untere Fläche schräg zu der oberen Fläche verläuft, so dass sich eine Ebene, die die obere Fläche beschreibt und eine Ebene, die die untere Fläche beschreibt, in Richtung des vorderen Endes schneiden, einer Aussparung 150, die an dem hinteren Ende angeordnet ist, wobei eine obere Wandung der Aussparung im Wesentlichen parallel zu der oberen Fläche verläuft und wobei eine untere Wandung der Aussparung im Wesentlichen parallel zu der unteren Fläche verläuft, und einem Zahnungsbereich 160, der an der unteren Fläche in einem Bereich des hinteren Endes angeordnet ist und von der unteren Fläche abstehende Zähne aufweist, wobei der Schieber ausgestaltet ist, zwischen den Lüfter und eine Kondensatwanne des Lüftungsgeräts geschoben zu werden.

## Beschreibung

Die Erfindung bezieht sich auf einen Schieber zum Justieren und Befestigen eines Lüfters in einem Lüftungsgerät, ein System aus einem Schieber und einer Kondensatwanne zum Justieren und Befestigen eines Lüfters sowie auf ein entsprechendes Lüftungsgerät.

Lüftungsgeräte werden immer mehr auch in Privathäusern eingesetzt. Dabei müssen regelmäßig Wartungen durchgeführt werden, meist durch Fachleute. Insbesondere nach Aufstellen eines Lüftungsgerätes kann es notwendig sein, einige Komponenten des Lüftungsgeräts nachträglich einzusetzen, zu justieren und/oder zu befestigen. Dies betrifft zum Beispiel auch den Lüfter.

Für die Funktionalität des Lüftungsgeräts ist es unerlässlich, dass die zu führende Luft in einer dichten Luftführung geführt wird. Nach einem möglichen Einsetzen/Warten/Ersetzen des Lüfters sind also gewisse Anforderungen an die Dichtigkeit zwischen dem Lüfter (bzw. dem Lüftergehäuse) und weiteren Komponenten der Luftführung, zum Beispiel einem Luftkanal, zu erfüllen, die durch Justieren und Befestigen des Lüfters von Fachleuten erreicht werden müssen. Vor allem muss (wieder) eine geschlossene Luftführung entstehen, die es ermöglicht, dass effizient Luft durch den Lüfter strömen kann. Dafür werden entsprechende Dichtungen zwischen dem Lüfter (bzw. dem Lüftergehäuse) und weiteren Komponenten, wie einem an dem Lüfter befindlichen Luftkanal, eingesetzt, die dann entsprechend kompressiert werden müssen, so dass keine Luft ein- oder austreten kann.

Im Stand der Technik wird dabei der Lüfter bzw. das Lüftergehäuse in dem dafür vorgesehenen Bauraum des Lüftungsgerätes befestigt. Beispielsweise wir der Lüfter in einen Rahmen eingedreht und dort verrastet. Auch kann der Lüfter im Bauraum an umgebenden Komponenten, wie auch einer den Luftkanal bildenden weiteren Komponente, befestigt, zum Beispiel verschraubt oder genietet, werden. Zusätzlich oder alternativ können Exzenterbolzen verwendet werden.

Aufgrund von Toleranzen im Einbauraum des Lüftungsgeräts variiert in der Regel zumindest eine Höhe des Einbauraums für den Lüfter, wodurch dann bei Einbau des Lüfters eine Leckage, d.h. eine Undichtigkeit, des Lüfters entstehen kann oder in extremen Fällen der Lüfter gar nicht eingebaut werden kann.

Die bekannten Methoden bergen demnach den Nachteil, dass mögliche Toleranzen, die im Bauraum des Lüftungsgerätes auftreten können, nicht ausgeglichen werden können. Anders ausgedrückt sind die Ansprüche an genaue Abmessungen der für den Bauraum verwendeten Komponenten sehr hoch, um einen exakten Einbau des Lüfters, und damit auch eine Dichtigkeit des Lüftergehäuses, zu gewährleisten. Auch kann eine nachträgliche Relaxation der Komponenten oder des Lüftergehäuses, welches üblicherweise aus Kunststoff hergestellt ist, nicht ausgeglichen werden. Eine Relaxation kann jedoch eine Lockerung der Dichtigkeit bedeuten, die dann zu einem Ein- und/oder Austreten von Luft führen kann.Ein der vorliegenden Erfindung zugrunde liegendes Ziel ist es deshalb, eine Dichtigkeit zwischen einem Lüfter, bzw. einem Gehäuse des Lüfters, und einer an dem Gehäuse befindlichen weiteren Komponente, wie einem Luftkanal, mit einfachen Mitteln herzustellen bzw. zu gewährleisten. Insbesondere stellt die Erfindung eine Lösung zur genauen Justierung des Lüfters bereit, ohne dass hohe Anforderungen an die Abmaße der das Lüftergehäuse umgebenden Komponenten gestellt werden und durch die nachträgliche Relaxationen, die möglicherweise eine Undichtigkeit des Lüftergehäuses hervorrufen, ausgeglichen werden können.

Erfindungsgemäß wird nach einem ersten Aspekt ein Schieber vorgeschlagen, wie er in Anspruch 1 definiert ist, nämlich ein Schieber zum Justieren und Befestigen eines Lüfters in einem Lüftungsgeräts, wobei der Schieber ein vorderes Ende und ein hinteres Ende aufweist und weiter eine obere Fläche und eine untere Fläche aufweist, wobei die untere Fläche schräg zu der oberen Fläche verläuft, so dass sich eine Ebene, die die obere Fläche beschreibt und eine Ebene, die die untere Fläche beschreibt, in Richtung des vorderen Endes schneiden, wobei der Schieber weiter eine Aussparung aufweist, wobei die Aussparung an dem hinteren Ende angeordnet ist, wobei eine obere Wandung der Aussparung im Wesentlichen parallel zu der oberen Fläche verläuft und wobei eine untere Wandung der Aussparung im Wesentlichen parallel zu der unteren Fläche verläuft, wobei der Schieber weiter einen Zahnungsbereich aufweist, wobei der Zahnungsbereich an der unteren Fläche in einem Bereich des hinteren Endes angeordnet ist und von der unteren Fläche abstehende Zähne aufweist.

Der Schieber ist hierbei insbesondere ausgestaltet, zwischen den Lüfter und eine Kondensatwanne des Lüftungsgeräts geschoben zu werden, um den Lüfter in dem Lüftungsgerät zu justieren und zu befestigen. Die Ausgestaltung kann insbesondere durch die beschriebenen strukturellen Merkmale erreicht sein.

Nach Einbau des Lüfters in das Lüftungsgerät kann der Schieber unter den Lüfter geschoben werden und so den Lüfter nach oben drücken (in eine Dichtrichtung). Die schräge Anordnung ermöglicht ein Verschieben des Lüfters nach oben durch Schieben des Schiebers in eine zu der Dichtrichtung senkrechte Richtung, insbesondere ohne, dass der Lüfter dabei kippt. Der Zahnungsbereich ermöglicht ein sequenzielles Feststellen des Schiebers und damit des Lüfters, so dass ein kleinschrittiges Justieren des Lüfters möglich ist. Die Aussparung ermöglicht ein Nachgeben des Schiebers entsprechend der Kraft, die durch den Lüfter und die Kondensatwanne auf den Schieberwirkt, sowie durch Erhöhen der Kraft auf einen oberen Bereich und einen unteren Bereich des Schiebers ein Lösen des Zahnbereichs und damit ein Herausnehmen des Schiebers. Insbesondere wird durch den erfindungsgemäßen Schieber verhindert, dass eine Dichtung zwischen Lüfter, d.h. dem Lüftergehäuse, und einer weiteren Komponente, zum Beispiel einem Trennteil, auf Schub belastet wird. Durch eine Belastung auf Schub könnte die Dichtung verschoben oder beschädigt werden und ggf. eine Dichtigkeit nicht mehr gegeben sein. Die Erfindung verringert somit eine Beanspruchung der Dichtung zwischen Lüfter und der weiteren Komponente.

Es sei hier bereits angemerkt, dass der Schieber nicht notwendigerweise zwischen den Lüfter und die Kondensatwanne geschoben werden muss, sondern alternativ zu der Kondensatwanne auch eine entsprechende Extrakomponente vorgesehen sein kann.

Der Schieber hat vorzugsweise eine keilförmige Grundform, wobei der Schieber durch seine Ausrichtung im Lüftungsgerät eine obere Fläche, eine untere Fläche, eine vordere Fläche, eine rückseitige Fläche und zwei Seitenflächen umfasst. Dabei ist die vordere Fläche am vorderen Ende angeordnet und die rückseitige Fläche am hinteren Ende angeordnet. Weiter ist die obere Fläche am oberen Bereich und die untere Fläche am unteren Bereich angeordnet. Die entsprechende Orientierung des Schiebers entspricht der Orientierung des Schiebers im eingebauten Zustand des Schiebers in dem Lüftungsgerät.

Weiter hat der Schieber bevorzugt eine längliche Ausdehnung, wodurch eine Längsachse definiert wird, die bevorzugt entlang einer Schieberichtung orientiert ist.

Der Schieber weist ein vorderes Ende und ein hinteres Ende auf, wobei der Schieber in eine Schieberichtung zwischen den Lüfter und eine Kondensatwanne geschoben werden kann, wobei während des Schiebevorgangs das vordere Ende des Schiebers dem hinteren Ende des Schiebers vorangeht. Das vordere Ende und das hintere Ende entspricht jeweils einem Teil des Schiebers bei gedachter mittiger vertikaler Teilung des Schiebers senkrecht zu der Längsachse des Schiebers.

Die obere Fläche und die untere Fläche werden jeweils durch eine Ebene beschrieben, wobei die Ebenen sich in Richtung eines vorderen Endes des Schiebers schneiden. Eine Schnittachse der Ebene kann insbesondere außerhalb des Schiebers liegen, wobei die Schnittachse bevorzugt parallel zu der Ebene verläuft, die die obere Fläche beschreibt.

Der erfindungsgemäße Schieber weist eine Aussparung auf, die insbesondere eine keilförmige Grundform hat, d.h. das Volumen, dass von der Aussparung definiert wird, ist keilförmig. Vorzugsweise verläuft die Aussparung im Querschnitt im Wesentlichen parallel zu der oberen Fläche des Schiebers. Weiter verläuft die Aussparung vorzugsweise über eine gesamte Breite des Schiebers, d.h. von der einen Seitenfläche des Schiebers zu der anderen Seitenfläche des Schiebers. Dabei ist bevorzugt der Querschnitt der Aussparung über die Breite gleich. Die Aussparung ist an einem hinteren Ende des Schiebers, bevorzugt in einem unteren Bereich des hinteren Endes des Schiebers, angeordnet. Der untere Bereich und ein oberer Bereich des Schiebers entspricht dabei jeweils einem Teil des Schiebers bei gedachter mittiger horizontaler Teilung des Schiebers entlang der Längsachse des Schiebers.

Der Zahnungsbereich ist an der unteren Fläche des Schiebers angeordnet, wobei der Zahnungsbereich in einem Bereich des hinteren Endes, d.h. am hinteren Ende, des Schiebers, an der unteren Flächen angeordnet ist. Der Zahnungsbereich weist Zähne auf, die von der unteren Fläche abstehen, insbesondere senkrecht abstehen. Die Zähne weisen dabei bevorzugt eine dreieckige Querschnittsfläche auf, wobei die dreieckige Querschnittsfläche bevorzugt einen Hinterschnitt aufweist, d.h. die Querschnittsfläche bevorzugt hinterschnittig dreieckig ist. Der größte Winkel des Dreiecks ist vorzugsweise in Richtung des hinteren Endes des Schiebers angeordnet. Alternativ kann die dreieckige Querschnittsfläche auch durch ein rechtwinkliges Dreieck ohne Hinterschnitt beschrieben werden, wobei dann der rechte Winkel in Richtung des hinteren Endes des Schiebers angeordnet ist.

In einer bevorzugten Ausführungsform ist der Zahnungsbereich in einem von der unteren Fläche abstehenden Bereich angeordnet. Dadurch umfasst der Schieber einen Absatz zwischen der unteren Fläche und dem Zahnungsbereich, so dass der Schieber auf der unteren Fläche aufliegt und beim Schieben in die Schieberichtung bis zum Anstoß an den Absatz geschoben werden kann. Durch entsprechende Dimensionierung des abstehenden Bereichs kann verhindert werden, dass eine (zu große) Kraft auf den Zahnungsbereich bzw. die Zähne wirkt.

In einer weiteren bevorzugten Ausführungsform weist der Schieber am vorderen Ende einen ersten Anstoß auf, der senkrecht zu der oberen Fläche verläuft, wobei der erste Anstoß insbesondere einer vorderen Fläche des Schiebers entspricht. Zusätzlich oder alternativ weist der Schieber im Bereich des hinteren Endes einen zweiten Anstoß auf, der senkrecht von der oberen Fläche absteht. Ein Anstoß definiert in Schieberichtung einen Stopp, d.h. der Schieber kann in Schieberichtung nur in einem vorgegebenen Bereich geschoben werden. Dies ermöglicht ein einfaches Handling des Schiebers und verhindert insbesondere Fehljustierungen.

In einer weiteren bevorzugten Ausführungsform weist der Schieber eine Schiene auf, wobei die Schiene an der unteren Fläche des Schiebers angeordnet ist und wobei eine untere Fläche der Schiene parallel zu der unteren Fläche des Schiebers verläuft. Insbesondere steht die Schiene senkrecht von der unteren Fläche des Schiebers ab. Weiter ist die Schiene vorzugsweise mittig zwischen den zwei Seitenflächen des Schiebers angeordnet. Zusätzlich oder alternativ ist die Schiene in eine Schieberichtung des Schiebers kürzer als die untere Fläche des Schiebers, d.h. insbesondere am vorderen Ende des Schiebers ragt die untere Fläche des Schiebers über die Schiene in die Schieberichtung hinaus. Bevorzugt wird eine Schiene vorgesehen, wobei alternativ auch zwei oder mehrere Schienen vorgesehen sein können. Die Schiene ermöglicht ein Führen des Schiebers während des Schiebevorgangs unter den Lüfter.

In einer weiteren bevorzugten Ausführungsform weist der Schieber am hinteren Ende ein Betätigungselement auf, wobei das Betätigungselement ein oberes Hebelelement und ein unteres Hebelelement aufweist, wobei das obere Hebelelement oberhalb der Aussparung angeordnet ist und das untere Hebelelement unterhalb der Aussparung angeordnet ist. Insbesondere weist der Schieber einen oberen Bereich und einen unteren Bereich auf, wobei das obere Hebelelement an dem oberen Bereich des Schiebers angeordnet ist und das untere Hebelelement an dem unteren Bereich des Schiebers angeordnet ist. Dadurch kann ein Kraftausüben bzw. Zusammendrücken des oberen Bereichs und des unteren Bereichs des Schiebers, zum Beispiel zum Lösen der Zähne aus einer entsprechenden Zahnungsschiene, und damit ein Herausnehmen des Schiebers aus dem Lüftungsgerät vereinfacht werden.

In einer weiteren bevorzugten Ausführungsform weist die obere Fläche am vorderen Ende eine Schräge auf, die in Richtung der unteren Fläche in die Schieberichtung abgeschrägt ist. Dies vereinfacht ein Einsetzen des Schiebers unter den Lüfter.

Es wurde gefunden, dass ein bevorzugter Winkel, der durch die Schräge der unteren Fläche zu der oberen Fläche, d.h. ein Winkel zwischen den entsprechenden Ebenen, zwischen 6° und 10° liegt. Besonders bevorzugt ist ein Winkel zwischen der oberen Fläche und der unteren Fläche von 8°.

Die Erfindung bezieht sich auch auf ein System mit zwei Schiebern, die jeweils nach einer der genannten Ausführungsformen ausgestaltet sind, und einer Kondensatwanne. Die Kondensatwanne entspricht bevorzugt einer rechteckigen Wanne, welche mittig nach unten läuft und mittig eine Öffnung aufweist, so dass Kondensatflüssigkeit ablaufen kann.

Eine herkömmliche Kondensatwanne ist üblicherweise in einem Bereich unter einem Wärmeübertrager in dem Lüftungsgerät angeordnet, um mögliche Kondensatflüssigkeit, welches im Wärmeübertrager anfällt, ablaufen zu lassen. Hier ist die Kondensatwanne zusätzlich oder alternativ unterhalb des Lüfters angeordnet.

In dem erfindungsgemäßen System weist die Kondensatwanne zwei Führungsbereiche auf, die an zwei gegenüberliegenden Seiten der Wanne angeordnet sind und jeweils ausgestaltet sind, einen Schieber aufzunehmen. Insbesondere weist jeder der Führungsbereiche eine Führungsbahn und eine Zahnschiene auf, wobei die Führungsbahn jeweils ausgestaltet ist, zumindest einen Teil des Schiebers aufzunehmen und wobei die Zahnschiene jeweils komplementär zu dem Zahnbereich ausgestaltet ist, wobei der Schieber jeweils ausgestaltet ist, in eine Schieberichtung in die jeweilige Führungsbahn geschoben zu werden, so dass sich der jeweilige Zahnbereich mit der jeweiligen Zahnschiene verzahnt.

Alternativ zu einer Kondensatwanne mit zwei Führungsbereichen können auch zwei von der Kondensatwanne unabhängige Führungsbereiche vorgesehen sein, die dann die obige Ausgestaltung zur Führung und Arretierung des Schiebers in dem Lüftungsgeräts aufweist.

Wird also vorliegend die Kondensatwanne hinsichtlich der zwei Führungsbereiche beschrieben, können alternativ auch zwei von der Kondensatwanne unabhängige Führungsbereiche vorgesehen sein.

In einer vorteilhaften Ausführungsform verläuft eine obere Fläche der Führungsbereiche zumindest in einem Bereich der Führungsbahn und in einem Bereich der Zahnschiene in einem zusammengeschobenen Zustand des Schiebers und der Kondensatwanne parallel zu der unteren Fläche des Schiebers. Bevorzugt weist die Führungsbahn jeweils wenigstens eine zu einer Führungsschiene des Schiebers komplementäre Führungsmulde auf, wobei dann bevorzugt die obere Fläche des Führungsbereichs und eine Fläche in der Führungsmulde in einem zusammengeschobenen Zustand des Schiebers und der Kondensatwanne parallel zu der unteren Fläche des Schiebers verläuft.

Die Zahnschiene ist bevorzugt gegenüber einer oberen Fläche des Führungsbereichs abgesenkt angeordnet, d.h. die Zahnschiene ist in einer Zahnschienenmulde in dem Führungsbereich angeordnet. Ist eine Führungsmulde vorgesehen, ist die Zahnschienenmulde tiefer als die Führungsmulde ausgebildet, d.h. eine Fläche der Zahnschienenmulde ist bevorzugt unterhalb der Fläche der Führungsmulde vorgesehen. Insbesondere ist bevorzugt eine Fläche der Zahnschienenmulde, eine Fläche der Führungsmulde und die obere Fläche des Führungsbereichs in einem zusammengeschobenen Zustand des Schiebers und der Kondensatwanne parallel zu der unteren Fläche des Schiebers angeordnet.

Weiter weist das System bevorzugt einen Lüfter auf, wobei der Lüfter ein Lüftergehäuse aufweist und oberhalb des Systems, d.h. des Schiebers und der Kondensatwanne, angeordnet. Bevorzugt ist an dem Lüftergehäuse eine Dichtung zu einer weiteren Komponente des Lüftungsgeräts, beispielsweise zu einem Trennteil, angeordnet, wobei durch Schieben des Schiebers in die Schieberichtung die Dichtung zwischen dem Lüftergehäuse und der weiteren Komponente kompressiert wird. Die weitere Komponente ist insbesondere oberhalb des Lüfters angeordnet, d.h. der Lüfter ist zwischen Schieber und weiterer Komponente und der Schieber zwischen Kondensatwanne, bzw. der Führungsbereiche, und Lüfter angeordnet.

Die Erfindung betrifft auch ein Lüftungsgerät mit einem Schieber, einer Kondensatwanne, bzw. der Führungsbereiche, einem Lüfter und einer weiteren Komponente, die bevorzugt zumindest einen Übergang zu einem Luftkanal bildet.

Insbesondere umfasst das Lüftungsgerät wenigstens einen, bevorzugt zwei, Schieber nach einer der genannten Ausführungsformen und eine Kondensatwanne nach einer der genannten Ausführungsformen. Zudem umfasst das Lüftungsgerät wenigstens einen Lüfter, wobei der Lüfter ein Lüftergehäuse aufweist und oberhalb der Kondensatwanne angeordnet ist. Weiter umfasst das Lüftungsgerät eine weitere Komponente, die zumindest einen Übergang zu einem Luftkanal bildet und oberhalb des Lüfters angeordnet ist, wobei zwischen dem Lüftergehäuse und/oder der weiteren Komponente eine Dichtung angeordnet ist und wobei durch Schieben des Schiebers in die Schieberichtung die Dichtung zwischen dem Lüftergehäuse und der weiteren Komponente kompressiert wird. Das Lüftungsgerät umfasst bevorzugt zudem weitere Komponenten, wie beispielsweise einen Wärmeübertrager, einen weiteren Lüfter etc.

Die Erfindung bezieht sich zudem auf eine Kondensatwanne, wobei die Kondensatwanne eine Wanne mit einer Abflussöffnung aufweist, wobei die Kondensatwanne zwei Führungsbereiche mit jeweils einer Führungsbahn und einer Zahnschiene aufweist, die an zwei gegenüberliegenden Seiten der Wanne angeordnet sind, wobei die Führungsbahn jeweils ausgestaltet ist, zumindest einen Teil eines Schiebers nach einer der genannten Ausführungsformen aufzunehmen und wobei die Zahnschiene jeweils komplementär zu einem Zahnbereich des Schiebers, insbesondere zu Zähnen des Schiebers, ausgestaltet ist, wobei die Kondensatwanne ausgestaltet ist, einen Schieber in der jeweiligen Führungsbahn aufzunehmen, so dass sich der jeweilige Zahnbereich des Schiebers mit der jeweiligen Zahnschiene der Kondensatwanne verzahnt.

Merkmale vorteilhafter Ausführungsformen der Erfindung sind insbesondere in den Unteransprüchen definiert, wobei weitere vorteilhafte Merkmale, Ausführungen und Ausgestaltungen für den Fachmann zudem aus der obigen Erläuterung und der folgenden Diskussion zu entnehmen sind.

Im Folgenden wird die vorliegende Erfindung anhand von in den Figuren dargestellten Ausführungsbeispielen weiter illustriert und erläutert. Hierbei zeigt
- Fig. 1a: eine schematische Darstellung zur Illustration eines Ausführungsbeispiels des erfindungsgemäßen Schiebers von der Seite,
- Fig. 1b: eine perspektivische Darstellung zur Illustration des Ausführungsbeispiels des Schiebers aus Fig. 1a,
- Fig. 2a: eine perspektivische Darstellung zur Illustration eines Ausführungsbeispiels der erfindungsgemäßen Kondensatwanne,
- Fig. 2b: eine schematische Darstellung zur Illustration des Ausführungsbeispiels der Kondensatwanne aus Fig. 2a von der Seite,
- Fig. 3: eine schematische Darstellung zur Illustration eines Ausführungsbeispiels einer unteren Isolierung eines Lüftungsgeräts,
- Fig. 4: eine schematische Darstellung zur Illustration eines Ausführungsbeispiels einer weiteren Komponente des Lüftungsgeräts,
- Fig. 5: eine schematische Darstellung zur Illustration eines Ausführungsbeispiels eines Lüfters in einem Lüftungsgerät von der Seite,
- Fig. 6: eine schematische Darstellung zur Illustration von Detailansichten des in Fig. 5 gezeigten Ausführungsbeispiels,
- Fig. 7: eine schematische Darstellung zur Illustration des Ausführungsbeispiels des Lüfters in einem Lüftungsgerät aus Fig. 5 von vorne,
- Fig. 8: eine schematische Darstellung zur Illustration von Detailansichten des in Fig. 7 gezeigten Ausführungsbeispiels,
- Fig. 9: eine perspektivische Darstellung zur Illustration des Ausführungsbeispiels des Lüfters in einem Lüftungsgerät aus Fig. 5 und
- Fig. 10: eine perspektivische Darstellung zur Illustration von Detailansichten des in Fig. 9 gezeigten Ausführungsbeispiels.

In den beiliegenden Zeichnungen sowie den Erläuterungen zu diesen Zeichnungen sind einander entsprechende bzw. in Beziehung stehende Elemente - soweit zweckdienlich - mit jeweils entsprechenden oder ähnlichen Bezugszeichen gekennzeichnet, auch wenn sie in unterschiedlichen Ausführungsbeispielen zu finden sind.

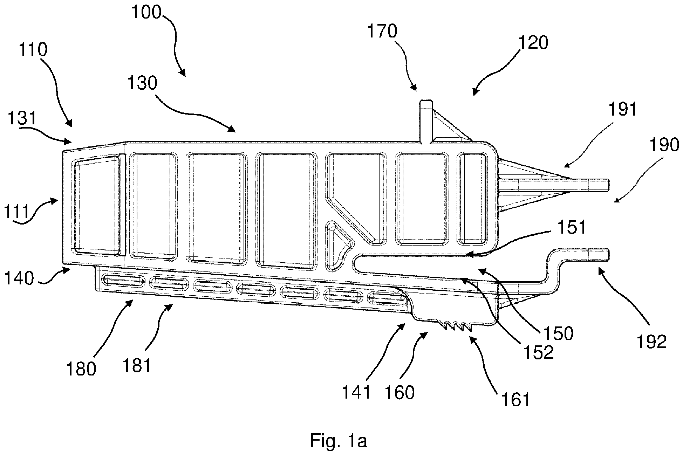

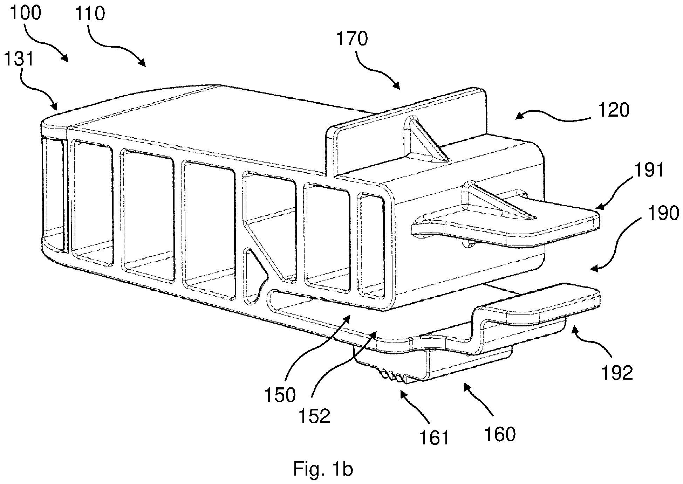

Fig. 1a zeigt eine schematische Darstellung zur Illustration eines Ausführungsbeispiels des erfindungsgemäßen Schiebers von der Seite, Fig. 1b zeigt eine perspektivische Darstellung zur Illustration des Ausführungsbeispiels des Schiebers aus Fig. 1a von der Seite und von oben. Der Schieber 100 ist ausgestaltet, zwischen einen Lüfter und eine Kondensatwanne in einem Lüftungsgerät geschoben zu werden, um den Lüfter in dem Lüftungsgerät zu justieren und zu befestigen. D.h. der Schieber 100 ist zum Justieren und Befestigen eines Lüfters in einem Lüftungsgerät vorgesehen und eingerichtet.

Der Schieber 100 weist ein vorderes Ende 110 und ein hinteres Ende 120 auf. Weiter weist der Schieber 100 eine obere Fläche 130 und eine untere Fläche 140 auf, wobei die untere Fläche 140 schräg zu der oberen Fläche 130 verläuft, so dass sich eine Ebene, die die obere Fläche 130 beschreibt und eine Ebene, die die untere Fläche 140 beschreibt, in Richtung des vorderen Endes 110 schneiden.

Der Schieber 100 weist eine Aussparung 150 auf, wobei die Aussparung 150 an dem hinteren Ende 120 des Schiebers 100 angeordnet ist. Die Aussparung 150 weist eine obere Wandung 151 und eine untere Wandung 152 auf. Die obere Wandung 151 verläuft im Wesentlichen parallel zu der oberen Fläche 130 des Schiebers 100 und die untere Wandung 152 verläuft im Wesentlichen parallel zu der unteren Fläche 140 des Schiebers 100.

Der Schieber 100 weist zudem einen Zahnungsbereich 160 auf, der an der unteren Fläche 140 in einem Bereich des hinteren Endes 120 angeordnet ist. Der Zahnungsbereich 160 weist von der unteren Fläche 140 abstehende Zähne 161 auf.

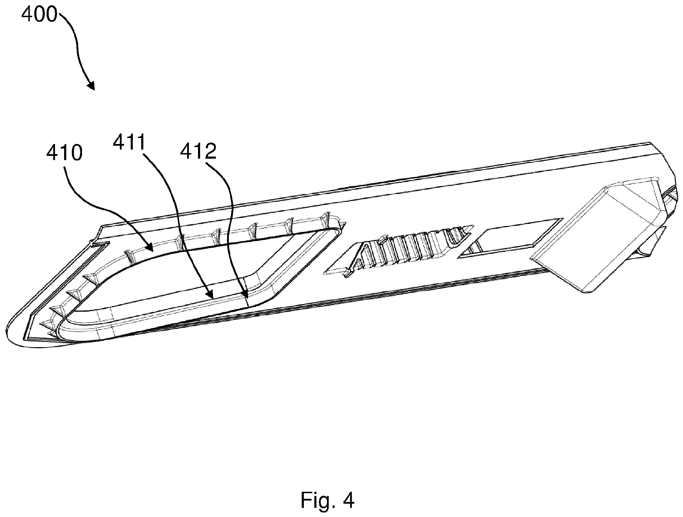

In der gezeigten Ausführungsform ist der Zahnungsbereich 160 in einem von der unteren Fläche 140 abstehenden Bereich 141 angeordnet. Weiter weist der Schieber 100 am vorderen Ende 110 einen ersten Anstoß 111 auf, der senkrecht zu der oberen Fläche 130 verläuft und einen an der oberen Fläche 130 im Bereich des hinteren Endes 120 angeordneten zweiten Anstoß 170, der senkrecht von der oberen Fläche 130 absteht. Der zweite Anstoß 170 ist insbesondere dann sinnvoll, wenn die weitere Komponente 400 oberhalb des Lüftungsgeräts keinen Kragen 411 aufweist (s. Fig. 4).

Der gezeigte Schieber 100 weist zudem eine Schiene 180 auf, wobei die Schiene 180 an der unteren Fläche 140 des Schiebers 100 angeordnet ist. Eine untere Fläche 181 der Schiene 180 verläuft parallel zu der unteren Fläche 140 des Schiebers 100. Die Schiene 180 steht senkrecht von der unteren Fläche 140 des Schiebers 100 ab und mittig zwischen zwei Seitenflächen des Schiebers 100 angeordnet. In der gezeigten Ausführungsform ist die Schiene 180 kürzer als die untere Fläche 140 des Schiebers 100 in die Schieberichtung.

Weiter weist der gezeigte Schieber 100 am hinteren Ende 120 ein Betätigungselement 190 auf, wobei das Betätigungselement 190 ein oberes Hebelelement 191 und ein unteres Hebelelement 192 aufweist. Das obere Hebelelement 191 ist oberhalb der Aussparung 150 angeordnet und das untere Hebelelement 192 ist unterhalb der Aussparung 150 angeordnet.

Weiter weist der Schieber 100 in der gezeigten Ausführungsform an der oberen Fläche 130 am vorderen Ende 110 eine Schräge 131 auf. Insbesondere verläuft die Schräge 131 in die Schieberichtung in Richtung der unteren Fläche 140.

Der Winkel zwischen der oberen Fläche 130 und der unteren Fläche 140 beträgt bevorzugt zwischen 6° und 10°, besonders bevorzugt 8°.

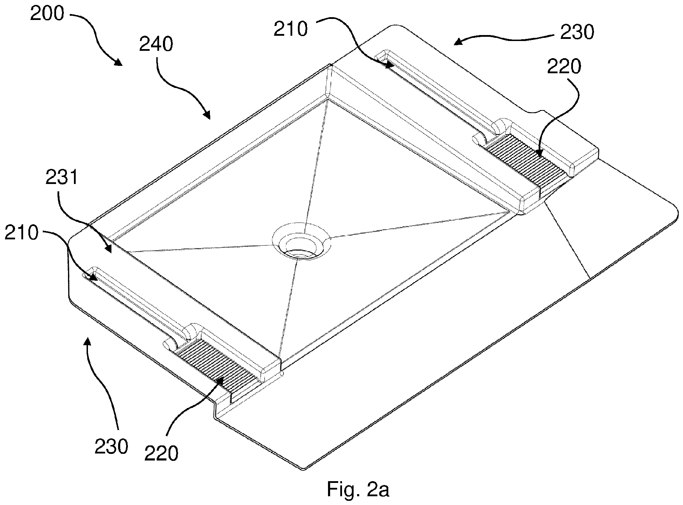

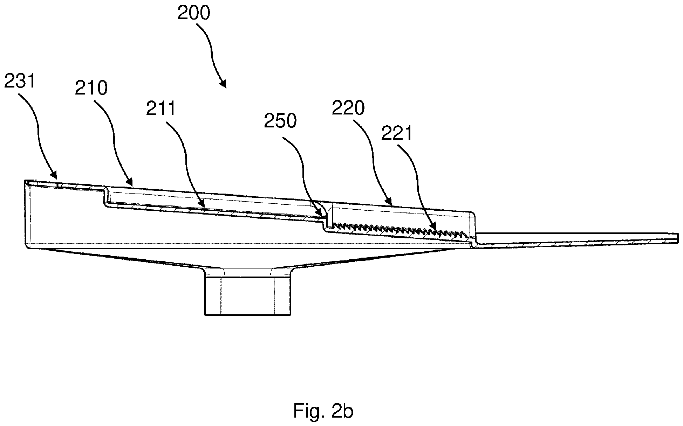

Fig. 2a zeigt eine perspektivische Darstellung zur Illustration eines Ausführungsbeispiels der erfindungsgemäßen Kondensatwanne, Fig. 2b zeigt eine schematische Darstellung zur Illustration des Ausführungsbeispiels der Kondensatwanne aus Fig. 2a von der Seite.

Die Kondensatwanne 200 weist zwei Führungsbereiche 230 auf, wobei jeder der zwei Führungsbereiche 230 eine Führungsbahn 210 und eine Zahnschiene 220 aufweist. Insbesondere weist die Kondensatwanne 200 eine rechteckige Wanne 240 auf, wobei die zwei Führungsbereiche 230 neben der rechteckigen Wanne 240 an zwei gegenüberliegenden Seiten der Wanne 240 angeordnet sind.

Die Führungsbahn 210 ist jeweils ausgestaltet, zumindest einen Teil des Schiebers 100 aufzunehmen. Insbesondere ist die Führungsbahn 210 ausgestaltet, die Schiene 180 des Schiebers 100 aufzunehmen. Die Führungsbahn 210 weist eine Führungsmulde auf, die einer länglichen Vertiefung entspricht und in der gezeigten Ausführungsform in einem seitlichen Bereich der Kondensatwanne 200 angeordnet ist.

Die Zahnschiene 220 weist jeweils zudem eine Zahnschienenmulde auf, die mit der Führungsmulde verbunden ist. Die Zahnschiene 220 ist komplementär zu dem Zahnungsbereich 160 des Schiebers 100 ausgestaltet. Wenn der Schieber 100 in Schieberichtung in die Führungsbahn 210 geschoben wird, verzahnt sich der Zahnungsbereich 160 mit der Zahnschiene 220.

Eine obere Fläche 231 der Führungsbereiche 230 verläuft in einem zusammengeschobenen Zustand parallel zu der unteren Fläche 140 des Schiebers 100. Insbesondere weist die Führungsmulde eine Fläche 211 auf und die Zahnschienenmulde eine Fläche 221, wobei die Fläche 211 der Führungsmulde und die Fläche 221 der Zahnschienenmulde in der gezeigten Ausführungsform parallel zu der oberen Fläche 231 der Führungsbereiche verlaufen, d.h. auch die Fläche 211 der Führungsmulde und die Fläche 221 der Zahnschienenmulde sind im eingebauten Zustand parallel zu der unteren Fläche 140 des Schiebers 100.

Insbesondere ist die Fläche 211 der Führungsmulde unterhalb der oberen Fläche 231 der Führungsbereiche 230 angeordnet. Weiter ist die Fläche 221 der Zahnschienenmulde unterhalb der Fläche 211 der Führungsmulde angeordnet ist. Dadurch ist zwischen der Zahnschiene 220 und der Führungsband 210 ein Anschlag 250, an den zum Beispiel ein abstehender Bereich 141 des Schiebers 100 anschlagen kann.

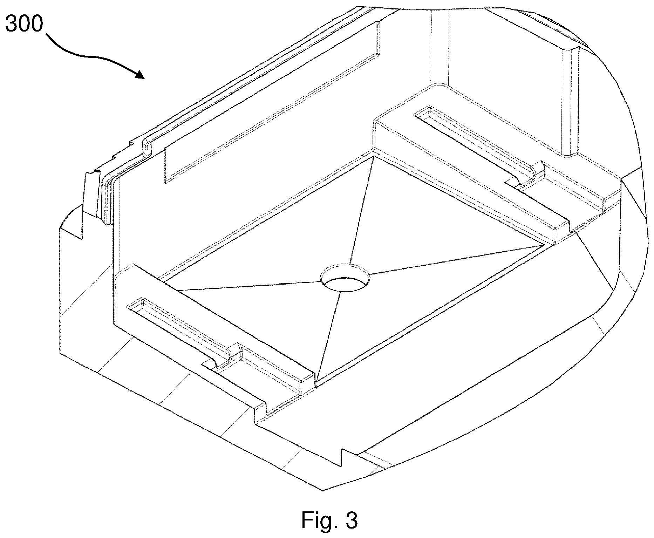

Fig. 3 zeigt eine schematische Darstellung zur Illustration eines Ausführungsbeispiels einer unteren Isolierung 300 eines Lüftungsgeräts. Die untere Isolierung 300 ist im Lüftungsgerät unterhalb der Kondensatwanne 200 angeordnet und entspricht einem Teil einer gesamten Isolierung des Lüftungsgeräts. Insbesondere ist die untere Isolierung 300 an die Kondensatwanne 200 angeformt, d.h. ein Profil der unteren Isolierung 300 entspricht einem unteren Profil der Kondensatwanne 200. Dementsprechend weist die untere Isolierung 300 eine Vertiefung für die Führungsmulde und für die Zahnschienenmulde auf, d.h. für die zwei Führungsbereiche 230, insbesondere die Führungsbänder 210 und die Zahnschienen 220.

Fig. 4 zeigt eine schematische Darstellung zur Illustration eines Ausführungsbeispiels einer weiteren Komponente 400 des Lüftungsgeräts. Die weitere Komponente 400 ist in dem Lüftungsgerät oberhalb eines Luftauslasses eines Lüftergehäuses angeordnet und entspricht insbesondere einem Anschlusselement, welches einen Übergang zu einem Luftkanal bildet. Die weitere Komponente 400 kann auch als Trennteil verstanden werden. Die weitere Komponente 400 umfasst eine Öffnung 410 mit einem Kragen 411 zur Verbindung mit einem Lüfter, bzw. eines Lüftergehäuses eines Lüfters, aufweist. An dem Kragen 411 ist eine Dichtung 412 angeklebt, die durch Einschieben des Schiebers 100 unter den Lüfter 500 kompressiert werden kann. Der Kragen 411 ist insbesondere dann bevorzugt, wenn der Schieber 100 keinen zweiten Anstoß 170 aufweist.

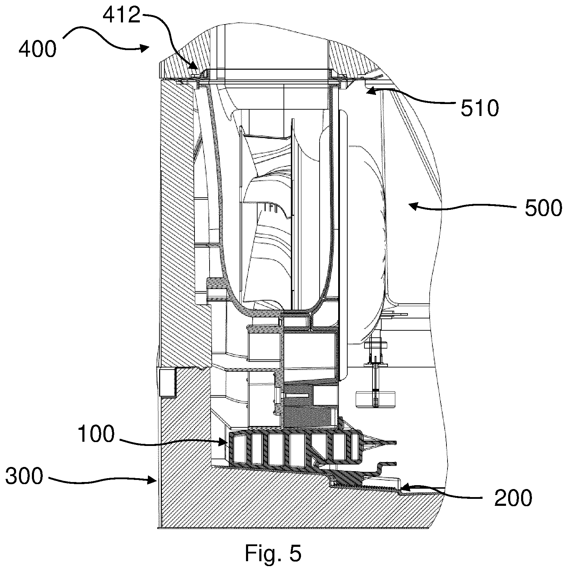

Fig. 5 zeigt eine schematische Darstellung zur Illustration eines Ausführungsbeispiels eines Lüfters in einem Lüftungsgerät von der Seite. Insbesondere ist im unteren Teil der Fig. 5 ein Schieber 100 gezeigt, wobei unterhalb des Schiebers 100 eine Kondensatwanne 200 und unter der Kondensatwanne 200 eine untere Isolierung 300 gezeigt ist. Der Schieber 100 und die Kondensatwanne 200 bilden ein erfindungsgemäßes System. Oberhalb des Schiebers 100 ist der Lüfter 500 und insbesondere ein Lüftergehäuse 510 gezeigt, wobei ein unterer Teil des Lüftergehäuses 510 auf dem Schieber 100 aufliegt und vorzugsweise an einem zweiten Anstoß des Schiebers 100 anliegt.

Zudem ist in Fig. 5 die weitere Komponente 400 gezeigt, die oberhalb des Lüfters 500 angeordnet ist. In die Öffnung 410 der weiteren Komponente 400 ist der Lüfter 500, bzw. das Lüftergehäuse 510 des Lüfters 500, gesteckt. Zwischen dem Lüftergehäuse 510 und/oder der weiteren Komponente 400 ist eine Dichtung 412 angeordnet. Durch Schieben des Schiebers 100 in die Schieberichtung, d.h. in Fig. 5 nach links, wird die Dichtung 412 zwischen dem Lüftergehäuse 510 und der weiteren Komponente 400 ohne Schubbelastungen kompressiert.

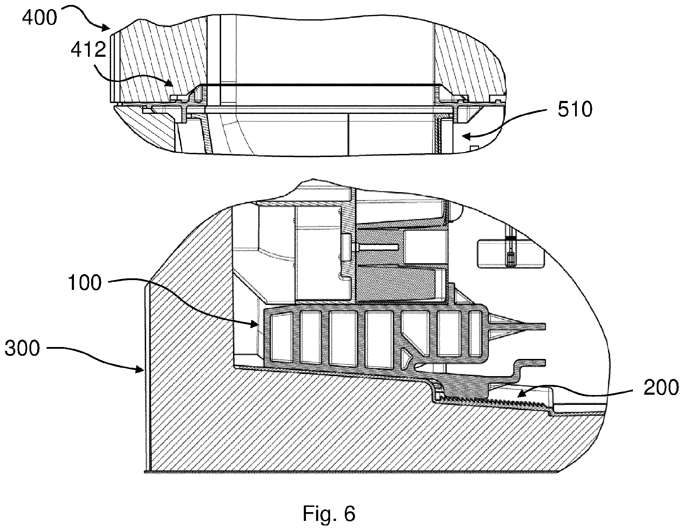

Fig. 6 zeigt eine schematische Darstellung zur Illustrationen von Detailansichten des in Fig. 5 gezeigten Ausführungsbeispiels.

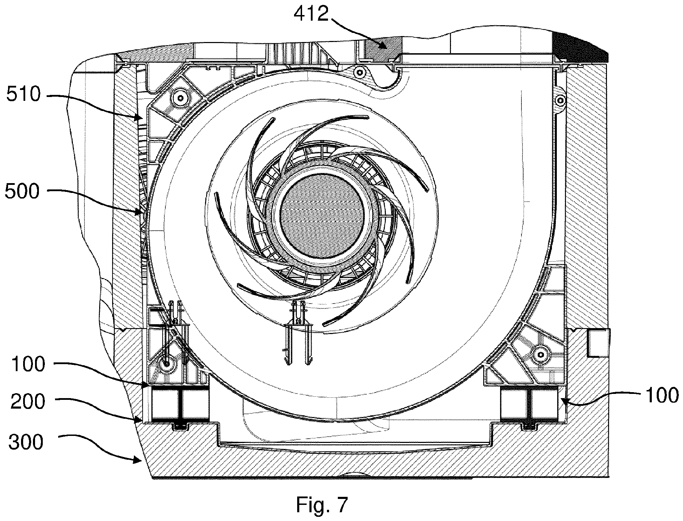

Fig. 7 zeigt eine schematische Darstellung zur Illustration des Ausführungsbeispiels des Lüfters in einem Lüftungsgerät aus Fig. 5 von vorne. Aus dieser Perspektive lassen sich zwei Schieber 100 erkennen, die oberhalb einer Kondensatwanne 200 angeordnet sind, wobei die Kondensatwanne 200 wiederum oberhalb der unteren Isolierung 300 angeordnet ist. Oberhalb der zwei Schieber 100 ist der Lüfter 500, bzw. das Lüftergehäuses 510 des Lüfters 500, angeordnet. Durch Schieben der Schieber 100 in Schieberichtung, in Fig. 7 einer Richtung in die Blattebene hinein, bewegt sich der Lüfter 500 nach oben und kompressiert die Dichtung 412, die zwischen dem Lüfter 500, d.h. dem Lüftergehäuse 510, und der weiteren Komponente 400 und/oder an der weiteren Komponente 400 angeordnet ist.

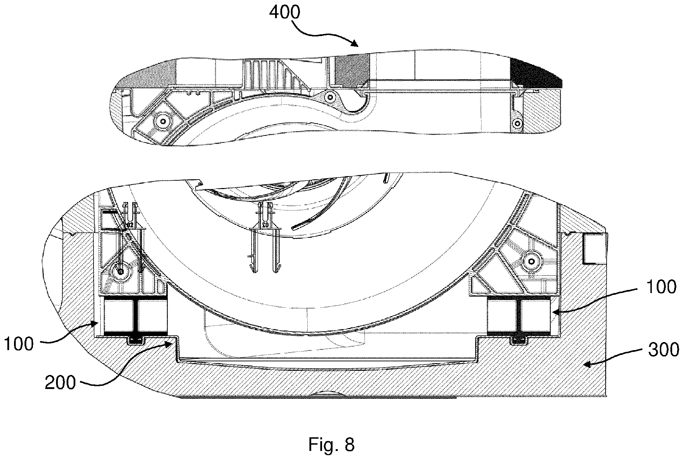

Fig. 8 zeigt eine schematische Darstellung zur Illustration von Detailansichten des in Fig. 7 gezeigten Ausführungsbeispiels.

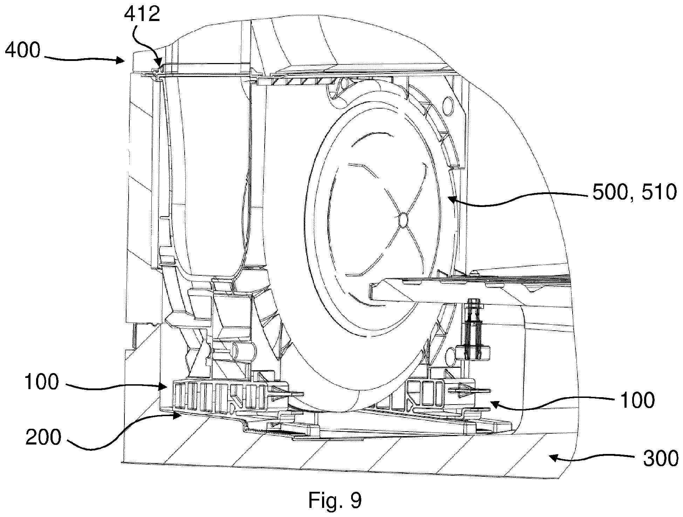

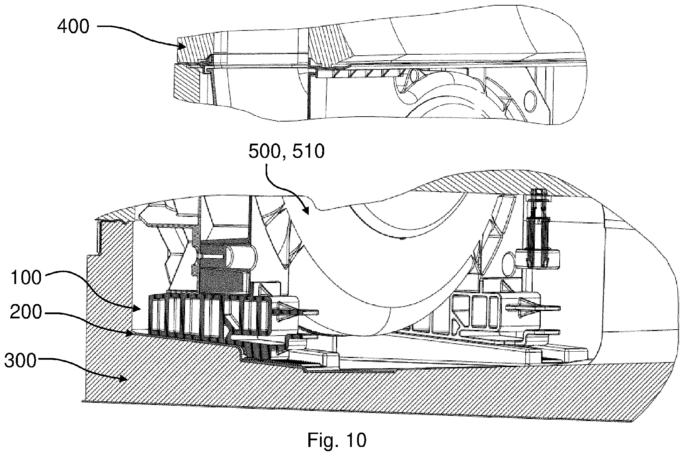

Fig. 9 zeigt eine perspektivische Darstellung zur Illustration des Ausführungsbeispiels des Lüfters in einem Lüftungsgerät aus Fig. 5 und Fig. 10 zeigt eine perspektivische Darstellung zur Illustration von Detailansichten des in Fig. 9 gezeigten Ausführungsbeispiels. Auch hier ist die Ausgestaltung der Schieber 100, der Kondensatwanne 200, der unteren Isolierung 300, des Lüfters 500 bzw. des Lüftergehäuses 510, und der weiteren Komponente 400 zu erkennen, um eine Kompression der Dichtung 412 in der gezeigten Ausführungsform zu erreichen.

Auch wenn in den Figuren verschiedene Aspekte oder Merkmale der Erfindung jeweils in Kombination gezeigt sind, ist für den Fachmann - soweit nicht anders angegeben - ersichtlich, dass die dargestellten und diskutieren Kombinationen nicht die einzig möglichen sind. Insbesondere können einander entsprechende Einheiten oder Merkmalskomplexe aus unterschiedlichen Ausführungsbeispielen miteinander ausgetauscht werden.

### Es folgen weitere Überlegungen zu der Erfindung:

Die Erfindung bezieht sich auf eine Befestigung eines Spiralgehäuses eines Lüftungsgerätes mit Hilfe eines einrastenden Schiebers. Dabei entspricht das Spiralgehäuse einem Lüftergehäuse, welches einen Ventilator umfasst. Das Lüftergehäuse umfasst bevorzugt Kunststoff oder besteht vollständig aus Kunststoff. Vorzugsweise wird das Lüftergehäuse durch ein Spritzgussverfahren hergestellt.

Für die Befestigung des Spiralgehäuses in dem Lüftergerät wird erfindungsgemäß ein Schieber eingesetzt, der ebenfalls bevorzugt aus einem Kunststoff besteht. Der Schieber weist in einer bevorzugten Ausführungsform vier Zähne auf, die sich in einer Zahnschiene verkeilen können. Bevorzugt sind zwei Zahnschienen (für zwei Schieber) vorgesehen, die sich weiter bevorzugt an einer oder zwei Stellen einer Kondensatwanne befinden. Die Kondensatwanne ist wiederum vorzugsweise an eine Isolierungskomponente, die zum Beispiel aus EPS gefertigt ist, gefügt.

Damit das Spiralgehäuse prozesssicher montiert werden kann, ist vorzugsweise an einer angrenzenden Komponente am Luftaustritt des Spiralgehäuses ein Kragen vorgesehen. In diesen Kragen wird der Luftaustrittsbereich des Spiralgehäuses hineingefügt, der Schieber "drückt" also das Spiralgehäuse bzw. den Luftaustrittbereich des Spiralgehäuses in eine Öffnung der angrenzenden Komponente, die von dem Kragen umgeben ist.

In einer bevorzugten Ausführungsform des Schiebers umfasst der Schieber eine obere Fläche und eine untere Fläche, die jeweils eine Ebene definieren, die sich wie folgt unterscheiden: Die obere Fläche definiert im eingebauten Zustand eine horizontale Ebene, die untere Fläche definiert eine zu der horizontalen Ebene schräge Ebene. Die schräge unteren Fläche hat die Funktion, dass der Schieber bei einer transversalen Bewegung des Schiebers an Höhe gewinnt. Die horizontale obere Fläche hat die Aufgabe, dass der Schieber sich ausschließlich vertikal nach oben bewegt. Insbesondere hat der Schieber eine keilförmige Gestalt.

Zur Befestigung des Schiebers im Lüftungsgerät ist bevorzugt in einem Bereich, in dem der Schieber (bzw. die Kondensatwanne) platziert wird, eine untere Isolierung, z.B. das EPS, angeschrägt. In die Anschrägung der Isolierung ist dann eine einem Führungsbereich entsprechende Mulde eingelassen. Der Führungsbereich und/oder die entsprechende Mulde sorgt dafür, dass sich der Schieber immer am selben Ort in der entsprechenden Achsrichtung befindet. So kann sichergestellt werden, dass sich die Krafteinleitung vom Spiralgehäuse über den Schieber, über den Führungsbereich, d.h. ggf. über die Kondensatwanne, in die Isolierung, d.h. das EPS, immer im selben Bereich befindet, wodurch man den entsprechenden Bereich konstruktiv auslegen kann.

Da die Isolierung, d.h. das EPS, oft eine empfindliche Oberfläche hat und der Lüfter in seinem Lebenszyklus zu Wartungszwecken des Öfteren ausgebaut werden muss, würde in diesem Fall die Oberfläche der Isolierung, d.h. des EPS, im Befestigungsbereich beschädigt werden. Dies trifft besonders auf die Zahnschiene zu, da auf diese eine größere Belastung wirkt.

Aus diesem Grund wird ein Führungsbereich vorgesehen, wobei bevorzugt die Kondensatwanne in dem Bereich der Lüfterbefestigung, d.h. der Schieber, mit einer Zusatzfunktion des Führungsbereichs ausgestattet. In dem Bereich der Lüfterbefestigung, d.h. des Führungsbereichs, weist die Kondensatwanne dann bevorzugt eine Führungsbahn zur Positionierung des Schiebers auf. Zudem weist die Kondensatwanne eine Zahnschiene auf, die einer den Zähnen des Schiebers entsprechenden Zahnteilung entspricht. Durch die Zahnteilung des Schiebers/der Zahnschiene ist es möglich, den Schieber bzw. mit dem Schieber das Spiralgehäuse in verschiedenen Höhen zu befestigen. Diesen Vorteil kann man sich zu Nutze machen, um anfallende Toleranzen, die sich sowohl im Herstellungsprozess der Kunststoffkomponenten als auch im Montageprozess der einzelnen Teile ergeben können, sowie Relaxationen des Kunststoffes über die Zeit, auszugleichen. Zudem bietet die Oberfläche der Kondensatwanne den Vorteil, dass die Oberfläche der Kondensatwanne im Befestigungsbereich nicht oder nicht so stark abgenutzt wird wie die der Isolierung. Im Fall, dass der Schieber und die Kondensatwanne aus Kunststoff hergestellt sind, d.h. eine Materialpaarung Kunststoff-Kunststoff vorliegt, wird zudem die Haft-/ Gleitreibung bei der Montage im Vergleich zu der beispielhaften Materialpaarung EPS-Kunststoff deutlich reduziert. Daher lässt sich der Schieber leichter auf der Kondensatwanne gleiten.

Vorzugsweise beträgt die Schräge des Schiebers, bzw. die Schräge der Isolierung, d.h. des EPS, und/oder die Schräge der Kondensatwanne 8°. Dieser Winkel ermöglicht einen bestimmten Hub pro weitergeschobenen Zahn in der transversalen Richtung. Dieser sinnvoll ausgewählte Hub ergibt sich aus einer arithmetischen und statistischen Toleranzberechnung, insbesondere hinsichtlich der verwendeten Materialien, z.B. der verwendeten und betroffenen Kunststoffkomponenten.

Der Schieber weist in einer bevorzugten Ausführungsform eine Schiene auf. Durch die Schiene kann der Schieber prozesssicher platziert werden, insbesondere in einer Führungsbahn der Kondensatwanne/Isolierung, um die Krafteinleitung in die Kondensatwanne und/oder Isolierung beeinflussen/steuern zu können.

Weiter bevorzugt ist bei dem Schieber vorne auf der oberen Fläche eine kleine Schräge integriert. Diese Schräge sorgt dafür, dass sich der Schieber leichter unter das Spiralgehäuse schieben lässt.

Im hinteren Bereich des Schiebers befinden sich die Zähne. Diese Zähne greifen in die Zahnschiene oder Zahnstange ein und verhindern, insbesondere durch den Hinterschnitt der Zähne, dass der Schieber sich in seiner Position löst.

Zusätzlich oder alternativ umfasst der Schieber eine Art "Spangenfunktion", d.h. das Betätigungselement, wobei ein oberer Teil und ein unterer Teil des Schiebers zusammengedrückt werden kann. Dafür kann der Schieber am oberen Teil und/oder am unteren Teil einen Absatz, d.h. ein Hebelelement, aufweisen, der zum Lösen ein Zusammendrücken vereinfacht. Durch Zusammendrücken lösen sich die Zähne des Schiebers aus der Zahnschiene/Zahnstange und der Schieber kann entfernt werden. Dadurch wird dann auch die Befestigung des Lüftergehäuses gelöst.

Bevorzugt ist in dem Kragen der weiteren Komponente, welche sich über dem Luftauslass des Spiralgehäuses befindet, eine Dichtung vorgesehen, die bevorzugt eingeklebt ist. Die Dichtung sorgt dafür, dass zwischen dem Luftauslass des Spiralgehäuses und dem nachfolgendem Luftkanal keine Luft ein-/ und/oder austreten kann. Diese Dichtung kann über die Position des Schiebers entsprechend kompressiert werden.

Sollte nun zum Beispiel im Laufe der Zeit eine Relaxation der Kunststoffe eintreten, könnte der Schieber diese Relaxation ausgleichen, indem man ihn nachstellt.

In einer bevorzugten Ausführungsform des Schiebers weist der Schieber einen Anschlag auf, wobei eine maximale Kompression erreicht wird, wenn der Anschlag des Schiebers die Gehäusevorderwand erreicht. Gleichzeitig drückt dann das Spiralgehäuse an die oben liegende weitere Komponente, so dass die Dichtung entsprechend kompressiert wird.

Zusätzlich oder alternativ weist der Schieber einen weiteren Anschlag an der oberen Fläche des Schiebers auf. Weiter zusätzlich oder alternativ können Anschläge zwischen der Kondensatwanne und dem Spiralgehäuse vorgesehen sein, die insbesondere sicherstellen, dass das Spiralgehäuse stets senkrecht zum Trennteil steht, egal wie weit der Schieber eingeführt wird. Insbesondere, wenn kein Kragen an der weiteren Komponente vorgesehen ist, kann der weitere Anschlag zur Positionierung des Lüfters hilfreich sein. Auch kann der weitere Anschlag einem vollständigen Lösen des Lüfters durch Relaxation bei anderen Befestigungskonzepten ohne Kragen entgegenwirken.

Die Erfindung betrifft einen Schieber zum Justieren und Befestigen eines Lüfters in einem Lüftungsgeräts, wobei der Schieber aufweist: ein vorderes Ende und ein hinteres Ende, eine obere Fläche und eine untere Fläche, wobei die untere Fläche schräg zu der oberen Fläche verläuft, so dass sich eine Ebene, die die obere Fläche beschreibt und eine Ebene, die die untere Fläche beschreibt, in Richtung des vorderen Endes schneiden, eine Aussparung, wobei die Aussparung an dem hinteren Ende angeordnet ist, wobei eine obere Wandung der Aussparung im Wesentlichen parallel zu der oberen Fläche verläuft und wobei eine untere Wandung der Aussparung im Wesentlichen parallel zu der unteren Fläche verläuft, und einen Zahnungsbereich, der an der unteren Fläche in einem Bereich des hinteren Endes angeordnet ist und von der unteren Fläche abstehende Zähne aufweist, wobei der Schieber ausgestaltet ist, zwischen den Lüfter und eine Kondensatwanne des Lüftungsgeräts geschoben zu werden, um den Lüfter in dem Lüftungsgerät zu justieren und zu befestigen.

## Patentansprüche

1. Schieber (100) zum Justieren und Befestigen eines Lüfters (500) in einem Lüftungsgeräts, wobei der Schieber (100) aufweist:
ein vorderes Ende (110) und ein hinteres Ende (120),
eine obere Fläche (130) und eine untere Fläche (140), wobei die untere Fläche (140) schräg zu der oberen Fläche (130) verläuft, so dass sich eine Ebene, die die obere Fläche (130) beschreibt und eine Ebene, die die untere Fläche (140) beschreibt, in Richtung des vorderen Endes (110) schneiden,
eine Aussparung (150), wobei die Aussparung (150) an dem hinteren Ende (120) angeordnet ist, wobei eine obere Wandung (151) der Aussparung (150) im Wesentlichen parallel zu der oberen Fläche (130) verläuft und wobei eine untere Wandung (152) der Aussparung (150) im Wesentlichen parallel zu der unteren Fläche (140) verläuft, und
einen Zahnungsbereich (160), der an der unteren Fläche (140) in einem Bereich des hinteren Endes (120) angeordnet ist und von der unteren Fläche (140) abstehende Zähne (161) aufweist,
wobei der Schieber (100) ausgestaltet ist, zwischen den Lüfter (500) und eine Kondensatwanne (200) des Lüftungsgeräts geschoben zu werden, um den Lüfter (500) in dem Lüftungsgerät zu justieren und zu befestigen.

2. Schieber (100) nach Anspruch 1, wobei der Zahnungsbereich (160) in einem von der unteren Fläche (140) abstehenden Bereich angeordnet ist.

3. Schieber (100) nach einem der Ansprüche 1 und 2, wobei der Schieber (100) am vorderen Ende (110) einen ersten Anstoß (111) aufweist, der senkrecht zu der oberen Fläche (130) verläuft und/oder an der oberen Fläche (130) im Bereich des hinteren Endes (120) einen zweiten Anstoß (170) aufweist, der senkrecht von der oberen Fläche (130) absteht.

4. Schieber (100) nach einem der vorherigen Ansprüche, wobei der Schieber (100) eine Schiene (180) aufweist, wobei die Schiene (180) an der unteren Fläche (140) des Schiebers (100) angeordnet ist und wobei eine untere Fläche (181) der Schiene (180) parallel zu der unteren Fläche (140) des Schiebers (100) verläuft.

5. Schieber (100) nach einem der vorherigen Ansprüche, wobei der Schieber (100) am hinteren Ende (120) ein Betätigungselement (190) aufweist, wobei das Betätigungselement (190) ein oberes Hebelelement (191) und ein unteres Hebelelement (192) aufweist, wobei das obere Hebelelement (191) oberhalb der Aussparung (150) angeordnet ist und das untere Hebelelement (192) unterhalb der Aussparung (150) angeordnet ist.

6. Schieber (100) nach einem der vorherigen Ansprüche, wobei die obere Fläche (130) am vorderen Ende (120) eine Schräge (131) aufweist, die in Richtung der unteren Fläche (140) in eine Schieberichtung des Schiebers (100) abgeschrägt ist.

7. Schieber (100) nach einem der vorherigen Ansprüche, wobei ein Winkel zwischen der oberen Fläche (130) und der unteren Fläche (140) 6° bis 10°, bevorzugt 8°, beträgt.

8. System mit:
zwei Schiebern (100), die jeweils nach einem der Ansprüche 1 bis 7 ausgestaltet sind, und
einer Kondensatwanne (200), wobei die Kondensatwanne (200) zwei Führungsbereiche mit jeweils einer Führungsbahn (210) und einer Zahnschiene (220) aufweist, wobei die Führungsbahn (210) jeweils ausgestaltet ist, zumindest einen Teil des Schiebers (100) aufzunehmen und wobei die Zahnschiene (220) jeweils komplementär zu dem Zahnbereich (160), insbesondere der Zähne (161), ausgestaltet ist,
wobei der Schieber (100) jeweils ausgestaltet ist, in einer Schieberichtung in die jeweilige Führungsbahn (210) geschoben zu werden, so dass sich der jeweilige Zahnbereich (160), insbesondere die Zähne (161), mit der jeweiligen Zahnschiene (220) verzahnt.

9. System nach Anspruch 8, wobei eine obere Fläche der zwei Führungsbereiche zumindest in einem Bereich der Führungsbahn (210) und in einem Bereich der Zahnschiene (220), in einem zusammengeschobenen Zustand des Schiebers (100) und der Kondensatwanne (200) parallel zu der unteren Fläche (140) des Schiebers (100) verläuft.

10. Lüftungsgerät mit:
einem System nach einem der Ansprüche 8 und 9,
einem Lüfter (500), wobei der Lüfter (500) ein Lüftergehäuse (510) aufweist und oberhalb des Systems angeordnet ist, und
einer weiteren Komponente (400), wobei die weitere Komponente (400) zumindest einen Übergang zu einem Luftkanal bildet und oberhalb des Lüfters (500) angeordnet ist,
wobei zwischen dem Lüftergehäuse (510) und/oder der weiteren Komponente (400) eine Dichtung (412) angeordnet ist und wobei durch Schieben des Schiebers (100) in die Schieberichtung die Dichtung (412) zwischen dem Lüftergehäuse (510) und der weiteren Komponente (400) kompressiert wird.
